# EUROPEAN PATENT SPECIFICATION

(11) **EP 3 690 647 B1**
(45) Date of publication and mention of the grant of the patent: **22.04.2026**
(21) Application number: 20158874.6
(22) Date of filing: 17.07.2014
(51) Int. Cl.: G06F 9/451, G06F 3/048, G06F 3/14, G06Q 50/10

(54) **DISPLAY APPARATUS AND METHOD FOR PROVIDING A USER INTERFACE**
ANZEIGEVORRICHTUNG UND VERFAHREN ZUR BEREITSTELLUNG EINER BENUTZERSCHNITTSTELLE
APPAREIL ET PROCÉDÉ D'AFFICHAGE POUR FOURNIR UNE INTERFACE UTILISATEUR

(30) Priority: 19.07.2013 KR 20130085347
(43) Date of publication of application: 05.08.2020
(62) Divisional of application: 14825901.3
(73) Proprietor: Samsung Electronics Co., Ltd., Gyeonggi-do 16677 (KR)
(72) Inventor: SUH, Ji-woo, 138-892 Seoul (KR)
(74) Representative: Taor, Simon Edward William

(56) References cited:
- US-A1- 2008 303 947
- US-A1- 2011 040 783

## Description

### Technical Field

Aspects of the exemplary embodiments relate to a display apparatus and a method of providing a user interface. More particularly, the exemplary embodiments relate to a display apparatus capable of informing a user with respect to source information related to contents included in a content list and a method for providing a user interface.

### Background Art

Due to recent developments in the technology, a display apparatus such as a television may receive a broadcast image from a broadcast station and may provide contents, and may also provide various contents received from various sources, such as an external device or the Internet.

Not only is the number of contents increasing, but contents are also being received from various sources. Thus users need to find out where such received contents have come from. In particular, when contents are selected from a source which is disconnected by a user from a display apparatus, while a history list including contents which have been played recently by the user is displayed, the user may not execute the corresponding contents. Also, the user may not find out what the source of the contents is.

That is, in order for a user to execute contents, the user needs to check the source of the contents by connecting various sources to the display apparatus, which causes the user to be inconvenienced.

US2011040783 discloses AV equipment capable of outputting a large amount of contents, in which the entire image (total number or the like) of the large amount of contents that can be outputted can be intuitively grasped. Further, the AV equipment has a means for easily retrieving contents whose output the user requests from the large amount of contents.

### Disclosure of Invention

### Solution to Problem

An aspect of the exemplary embodiments relates to a display apparatus which allows a user to more easily play contents by providing source information of the selected contents when the contents are provided from a source which is not connected to the current display apparatus, and a method for providing a user interface.

According to an aspect of the invention, there is provided a method for providing a user interface of a display apparatus.

According to another aspect of the invention, there is provided a display apparatus as set out in claim 4.

Optional features are set out in the dependent claims.

### Advantageous Effects of Invention

As described above, according to various exemplary embodiments, a user may easily check source information of contents provided by a source which is currently not connected to the display apparatus and thus, may watch contents more conveniently.

### Brief Description of Drawings

The above and/or other aspects of the exemplary embodiments will be more apparent by describing certain exemplary embodiments with reference to the accompanying drawings, in which:
FIG. 1 is a view which illustrates a configuration of a display apparatus, according to an exemplary embodiment;
FIG. 2 is a view which illustrates configuration of a display apparatus in detail according to an exemplary embodiment;
FIGS. 3 to 5 are views provided to explain a method of providing source information related to contents, according to an exemplary embodiment; and
FIG. 6 is a flowchart provided to explain a method of providing a user interface of a display apparatus, according to an exemplary embodiment.

### Best Mode for Carrying out the Invention

It should be observed the method steps and system components have been represented by conventional symbols in the figures, showing only specific details which are relevant for an understanding of the exemplary embodiments. Further, details may be readily apparent to person ordinarily skilled in the art may not have been disclosed. In the exemplary embodiments, relational terms such as first and second, and the like, may be used to distinguish one entity from another entity, without necessarily implying any actual relationship or order between such entities.

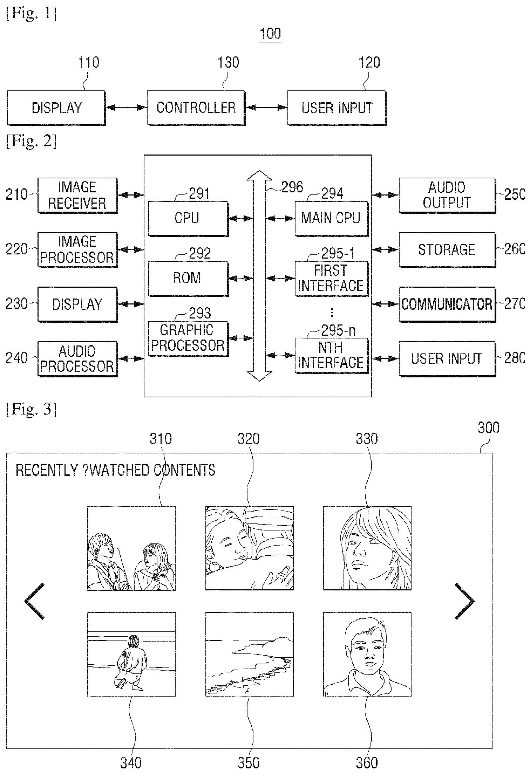

FIG. 1 is a view which briefly illustrates a configuration of a display apparatus according to an exemplary embodiment. As illustrated in FIG. 1, a display comprises a display 110, a user input 120, and a controller 130. In this case, the display apparatus 100 may be realized as a television, but this is only an example. The display apparatus 100 may be implemented as various display apparatuses, such as a tablet PC, a desktop PC, a notebook PC, a smart phone, and so on.

The display 110 outputs image data under the control of controller 130. In particular, the display 110 is configured to display a content list including at least one content. In this case, the content list is a history list including at least one content which has been reproduced by a user using the display apparatus. In addition, the display 110 is configured to display a guidance message including information regarding a source which provides a selected content.

The user input 120 is configured to receive a user command to control the display apparatus 100. In particular, the user input 120 is configured to receive a user command to select one of at least one content included in the content list.

The user input 120 may be implemented as a remote controller including a plurality of buttons, but this is only an example. The user input 120 may be implemented as various input devices such as a touch panel, a mouse, a keyboard, a motion input unit, a voice input, etc.

The controller 130 controls the display apparatus 100 according to a user command which is input through the user input 120. In particular, when one of the at least one content included in the content list is selected through the user input 120, the controller 130 is configured to determine whether or not a source providing the selected content is connected to the display apparatus 100.

In response to a determination that the source is not connected to the display apparatus 100, the controller 130 is configured to control the display 110 to display a guidance message which indicates information regarding the source. In this case, the controller 130 may generate a guidance message using source information related to contents which are stored in the storage whenever the contents are reproduced.

In addition, in response to a source providing the selected content being an external apparatus capable of connecting to the display apparatus (for example, a USB, a hard-disk, a DVD player, etc.), the controller 130 may control the display 110 to display a guidance message including information which requests connecting the external apparatus to the display apparatus 100.

Subsequently, controller 130 determines whether a source providing the selected content is connected to the display apparatus 100, within a predetermined period of time while the guidance message is displayed. Specifically, in response to the source providing the selected content not being connected to the display apparatus 100 within a predetermined period of time while the guidance message is displayed, the controller 130 may control the display 110 to remove the guidance message from the display screen and again display the content list. However, in response to the source providing the selected content being connected to the display apparatus 100 within a predetermined period of time while the guidance message is displayed, the controller 130 may control the display 110 to remove the guidance message from the display screen, and may reproduce the selected content by accessing the selected content stored in the connected source without any user input.

Meanwhile, in response to a determination that the source providing the content selected from the content list is connected to the display apparatus, the controller 130 may access and reproduce the selected content stored in the source.

As described above, according to the display apparatus 100, a user may easily check source information of contents provided by a source which is currently not connected to the display apparatus and thus, may watch contents more conveniently.

Hereinafter, the display apparatus will be explained in greater detail with reference to FIGS. 2 to 5. FIG. 2 is a view illustrating a detailed configuration of a display apparatus 200, according to an exemplary embodiment. As illustrated in FIG. 2, the display apparatus 200 comprises an image receiver 210, an image processor 220, a display 230, an audio processor 240, an audio output 250, a storage 260, a communicator 270, a user input 280 and a controller 290.

It is assumed that the display apparatus 200 of FIG. 2 is an apparatus performing various functions such as a communication function, a video reproduction function, a display function, and so on, and each element is described in a comprehensive manner. Thus, depending on the exemplary embodiments, some elements illustrated in FIG. 2 may be omitted or changed, or other elements may be added.

The image receiver 210 receives image data through various sources. For example, the image receiver 210 may receive broadcast data from an external broadcast station, or receive image data from an external apparatus, a server or an internal storage 260.

The image processor 220 is an element which processes image data received from the image receiver 210. The image processor 220 may perform various processing with respect to received image data such as decoding, scaling, noise filtering, frame rate conversion, resolution conversion, and so on.

The display 230 displays at least one of a video frame which is processed by the image processor 220 after being received from the image receiver 210 and various screens generated by a graphic processor 293. In particular, the display 230 is configured to display a content list including at least one content. In addition, the display 230 is configured to display a guidance message informing with respect to source information of the content when one of at least one content included in the content list is selected by a user.

The audio processor 240 is an element which processes audio data. The audio processor 240 may perform various processing with respect to audio data such as decoding, amplification, noise filtering, and so on. The audio data processed by the audio processor 240 may be output to the audio output 250.

The audio output 250 is an element which outputs not only various audio data processed by the audio processor 240 but also various sounds and voice messages. In this case, the audio output 250 may be implemented as a speaker, but this is only an example. The audio output 250 may also be implemented as an audio terminal.

The storage 260 stores various modules to drive the display apparatus 200. For example, the storage 260 may store software including a base module, a sensing module, a communication module, a presentation module, a web browser module and a service module. In this case, the base module refers to a basic module which processes a signal transmitted from each hardware element included in the display apparatus 200, and transmits the processed signal to an upper layer module. The sensing module is a module which collects information from various sensors, and analyzes and manages the collected information. The sensing module may include a face recognition module, a voice recognition module, a motion recognition module, and an NFC recognition module, and so on. The presentation module is a module to compose a display screen. The presentation module includes a multimedia module for reproducing and outputting multimedia contents, and a UI rendering module for UI and graphic processing. The communication module is a module to perform communication with outside apparatuses. The web browser module refers to a module which accesses a web server by performing web-browsing. The service module is a module including various applications for providing various services.

As described above, the storage 260 may include various program modules, but some of the various program modules may be omitted, changed, or added according to the type and attribute of the display apparatus 200. For example, when the display apparatus 200 is implemented as a smart phone, the base module may further comprise a location determination module to determine a GPS-based location, and the sensing module may further comprise a sensing module to detect a user motion.

In addition, the storage 260 may store information regarding contents when the contents are reproduced. In this case, the information regarding contents may include title, reproduction information, thumbnail image and source information.

The communicator 270 is an element which performs communication with various types of external apparatuses according to various types of communication methods. The communicator 270 may comprise various communication modules such as a USB module, a WiFi module, a Bluetooth^{®} module, a Near Field Communication (NFC) module, and so on. In this case, the WiFi module, the Bluetooth^{®} module, and the NFC chip respectively perform communication according to a WiFi method, a Bluetooth^{®} method and an NFC method. The NFC module refers to a module which operates according to an NFC method by using 13.56 MHz from among various RF-ID frequency bands such as 135 kHz, 13.56 MHz, 433 MHz, 860~960 MHz, 2.45 GHz, and so on. When the WiFi module or the Bluetooth^{®} module is used, various connection information such as SSID, session key, etc. is received/transmitted in advance so that various information can be received/transmitted using the same.

The user input 280 receives a user command to control overall operations of the display apparatus 200. In particular, the user input 280 is configured to receive a user command to generate a history list including contents which have been reproduced recently by a user. In addition, the input user 280 may receive a user command to select one content from a history list.

In this case, the user input 280 may be implemented as a remote controller including four direction keys, that is, up, down, left, and right direction keys, and an enter key, but this is only an example. The user input 280 may be implemented as various input devices such as a touch screen, a mouse, a pointing device, and so on.

The controller 290 controls overall operations of the display apparatus 200 by using various programs stored in storage 260.

As illustrated in FIG. 2, the controller 290 comprises a RAM 291, an ROM 292, a graphic processor 293, a main CPU 294, a first to nth interfaces 295-1~295-n, and a bus 296. In this case, the RAM 291, the ROM 292, the graphic processor 293, the main CPU 294, and the first to nth interfaces 295-1~295-n may be connected to each other through bus 296.

The ROM 292 stores a set of commands for system booting. In response to a turn-on command being input and power being supplied, the main CPU 294 copies an O/S stored in the storage 260 onto the RAM 291, according to a command stored in the ROM 292, and boots the system by executing the O/S. In response to the booting being completed, the main CPU 294 copies various application programs stored in the storage 260 onto the RAM 291 and performs the various operations by executing the application programs copied to the RAM 291.

The graphic processor 293 generates a screen including various objects such as an icon, an image, a text using a computing unit (not shown) and a rendering unit (not shown). The computing unit computes property values such as coordinates, shape, size and color of each object to be displayed according to the layout of the screen using a control command received from the user input 280. The rendering unit generates a screen with various layouts including objects based on the property values computed by the computing unit. The screen generated by the rendering unit is displayed within the display area of the display 230. In particular, the graphic processor 293 may generate an external apparatus list and a content list according to a user command.

The main CPU 294 access the storage 260 and performs booting using an O/S stored in the storage 260, and performs various operations using various programs, contents and data stored in the storage 260.

The first to nth interfaces 295-1~295-n are connected to the above-described various components. One of the interfaces may be a network interface which is connected to an external apparatus via network.

In particular, the controller 290 is configured to control the display 230 to display a content list including a plurality of contents according to a user command input through the input unit 280. Specifically, the controller 290 is configured to display a history list 300 including at least one content (310 to 360) which has been recently watched by a user, as illustrated in FIG. 3. When a user command to generate a history list is input through a menu.

In this case, the plurality of contents (310 to 360) included in the history list 300 may be contents provided by a various sources. For example, the plurality of contents (310 to 360) may be contents provided by at least one of an external server, an external apparatus (for example, a USB, a DVD player, etc.) and the storage 260. In this case, the plurality of contents included in the history list are displayed, regardless of whether a source providing the plurality of contents included in the history list is connected to the display apparatus 200. For example, in response to a source providing content C being a USB, the content C may be included in the history list even if the USB is not currently connected to the display apparatus 200.

In addition, as illustrated in FIG. 3, the controller 290 is configured to control the display 230 to display a thumbnail image corresponding to at least one content on the history list 300. In this case, the thumbnail image may be pre-stored in the storage 260 when the content is reproduced.

Further, the controller 290 may select one of at least one content included in the history list 300 by using a highlight.

Specifically, when a highlight is placed on one of a plurality of contents included in a content list, and an enter key is selected through the user input 280, the controller 230 may determine whether a source providing the selected content is currently connected to the display apparatus 200. In this case, in response to a determination that the source providing the selected content is not connected to the display apparatus 200, the controller 290 is configured to control the display 230 to display a guidance message which indicates information regarding the source providing the selected content.

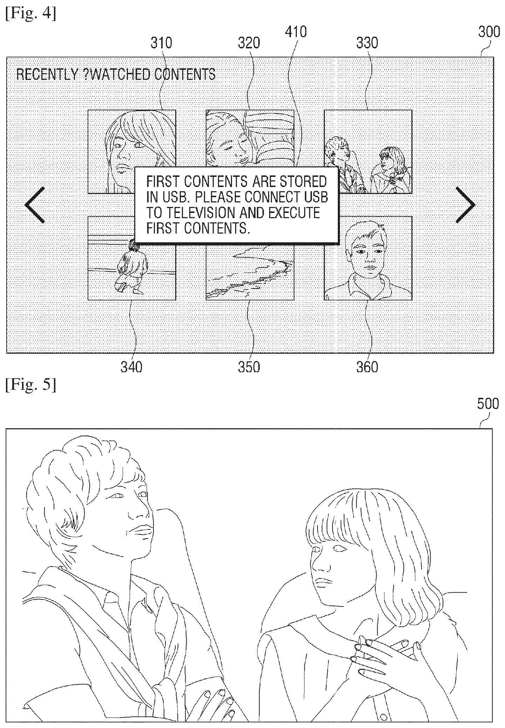

Specifically, as illustrated in FIG. 3, when a highlight is displayed on the first content 310 while the first content to the sixth content (310 to 360) are displayed, and then an enter key is selected, the controller 230 determines whether a USB, which is a source providing the first content 310, is currently connected to the display apparatus 200. In response to the USB which provides the first content 310 currently not being connected to the display apparatus 200, the controller 290 may control the display 230 to display a guidance message 410 including source information of the first content. In this case, the guidance message 410 may include source information of the first content 310 and a guidance message requesting to connect to the source which provides the first content 310. For example, the guidance message 410 may include a guidance message, "the first content is a content which is contained in a USB. Please execute the first content after connecting the USB to a television" as illustrated in FIG. 4. In this case, the controller 290 may generate the guidance message 410 by using source information which was stored when the first content 310 was previously reproduced.

In addition, the controller 290 may determine whether an external apparatus providing a selected content is connected to the display apparatus 200 within a predetermined period of time (for example, 5 seconds) while the guidance message 410 is displayed. For example, the controller 290 may determine whether a USB providing the first content 310 is connected to the display apparatus 200 within a predetermined period of time while the guidance message 410 is displayed, as illustrated in FIG. 4.

In response to a source providing the selected content not being connected to the display apparatus 200 within a predetermined period of time while the guidance message is displayed, the controller 290 may control the display 230 to remove the guidance message from the display screen and display a content list again. For example, in response to a USB providing the first content 310 not being connected to the display apparatus 200 within a predetermined period while the guidance message 410 is displayed as illustrated in FIG. 4, the controller 290 may control the display 230 to remove the guidance message 410 from the screen, and display a previously-displayed history list 300, as illustrated in FIG. 3.

However, in response to a source providing the selected content being connected to the display apparatus 200 within a predetermined period of time while the guidance message is displayed, the controller 290 may control the display 230 to remove the guidance message from the display screen, and may access and reproduce the selected content stored in the connected source without any user input. For example, in response to a USB providing the first content 310 being connected to the display apparatus 200 within a predetermined period of time while the guidance message 410 is displayed as illustrated in FIG. 4, the controller 290 may remove the guidance message 410 from the screen, and may control the display 230 and the audio output 250 to access the USB and reproduce the first content 310.

As illustrated in FIG. 4, in response to a cancellation or a previous button of a remote controller being selected while the guidance message 410 is displayed, the controller 290 may control the display 230 to remove the guidance message 410 from the display screen and display the history list 300, as illustrated in FIG. 3.

Meanwhile, in response to a determination that the USB providing the first content 310 being currently connected to the display apparatus 200, the controller 290 may not display any guidance message, and may control the display 230 and the audio output 250 to access the USB and reproduce the first content 310, as illustrated in FIG. 5.

As described above, according to the display apparatus 200, a user may easily check a source even in response to contents being provided from a source which is not currently connected to the display apparatus and thus, may watch contents more conveniently.

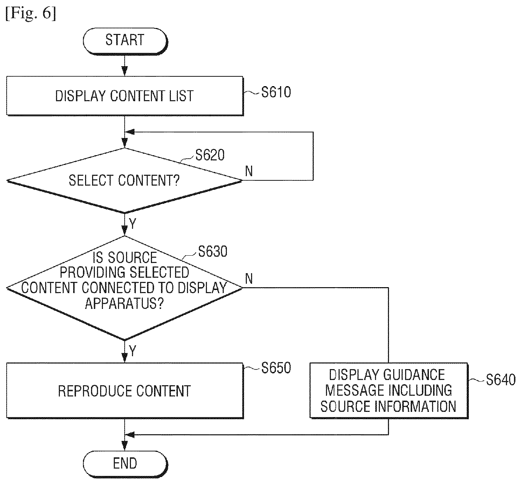

Hereinafter, a method for providing a user interface of the display apparatus 100 will be explained with reference to FIG. 6.

First of all, the display apparatus 100 displays a content list (S610). In this case, the content list includes at least one content. In addition, the content list is a history list including contents which have been recently watched by a user.

In addition, the display apparatus 100 determines whether one of at least one content included in the content list is selected (S620).

In response to a content being selected (S620-Y), the display apparatus 100 determines whether a source providing the selected content is connected to the display apparatus 100 (S630).

In response to a determination that a source providing the selected content is not connected to the display apparatus 100, the display apparatus 100 displays a guidance message including information regarding the source providing the selected content (S640). In this case, the guidance message may include information regarding the source providing the selected content and a guidance message requesting connection to the source providing the selected content to the display apparatus 100. The guidance message may disappear from the display screen when a predetermined period of time elapses or when a predetermined command of a user (for example, a user command to select a cancellation or a previous button) is input.

However, in response to a determination that the source providing the selected content is connected to the display apparatus 100 (S630-Y), the display apparatus 100 reproduces the selected content (S650).

Accordingly, a user may easily check source information of contents provided by a source which is currently not connected to the display apparatus and thus, may watch contents more conveniently.

The method for providing user interface according to various exemplary embodiments may be stored and used in various types of recording medium including non-transitory storage mediums.

Specifically, a code to perform the above-described methods may be stored in various types of recording medium which may be readable by a terminal such as Random Access Memory (RAM), flash memory, Read Only Memory (ROM), Erasable Programmable ROM (EPROM), Electronically Erasable and Programmable ROM (EEPROM), register, hard-disk, removable disk, memory card, USB memory, CD-ROM, and so on.

The foregoing exemplary embodiments and advantages are merely exemplary and are not to be construed as limiting the present invention. The present teaching can be readily applied to other types of apparatuses. Also, the description of the exemplary embodiments of the present inventive concept is intended to be illustrative, and not to limit the scope of the claims, and many alternatives, modifications, and variations will be apparent to those skilled in the art.

## Claims

1. A method for providing a user interface of a display apparatus (100, 200), the method comprising:
receiving a user command to generate a content list including at least one content, wherein the content list is a history list (300) including at least one content (310, 320, 330, 340, 350, 360) which has been reproduced by a user using the display apparatus (100, 200);
generating the content list including information regarding the least one content regardless of whether at least one source providing the at least one content (310, 320, 330, 340, 350, 360) in the content list is connected to the display apparatus (100, 200);
displaying the content list; and
determining whether a source providing selected content is connected to the display apparatus (100, 200) when one of the at least one content (310, 320, 330, 340, 350, 360) included in the content list is selected,
in response to a determination that the source is connected to the display apparatus (100, 200), accessing the selected content and playing the selected content, and
in response to a determination that the source is not connected to the display apparatus (100, 200), displaying a guidance message (410) indicating information regarding the source while the content list is displayed, and requesting connection to the source providing the selected content to the display apparatus
wherein the information regarding the plurality of contents included in the content list that is displayed comprises a plurality of thumbnail images each corresponding to the plurality of contents, wherein the display apparatus (100, 200) stores source information related to the reproduced content whenever the content is reproduced,
wherein the guidance message (410) provides the information regarding the source by using source information of the stored content.

2. The method as claimed in claim 1, comprising:
removing the guidance message (410) from a display screen and displaying the content list again when the source is not connected to the display apparatus (100, 200) within a predetermined period of time while the guidance message (410) is displayed.

3. The method as claimed in claim 1, comprising:
removing the guidance message (410) from a display screen and accessing and reproducing the selected content stored in the connected source when the source is connected to the display apparatus (100, 200) within a predetermined period of time while the guidance message (410) is displayed.

4. A display apparatus (100, 200), comprising:
a display (110, 230);
a user input (120, 280) configured to receive a user command to generate a content list including at least one content, wherein the content list is a history list (300) including at least one content (310, 320, 330, 340, 350, 360) which has been reproduced by a user using the display apparatus (100, 200); and
a controller (130, 290) configured to:
generating the content list including information regarding the least one content regardless of whether a source providing the at least one content (310, 320, 330, 340, 350, 360) in the content list is connected to the display apparatus (100, 200);
control the display to display the content list;
determine whether a source providing content selected by the user is connected to the display apparatus (100, 200), when one of at least one content (310, 320, 330, 340, 350, 360) included in the content list is selected,
in response to a determination that the source is connected to the display apparatus (100, 200), access the selected content and play the selected content, and
in response to a determination that the source is not connected to the display apparatus (100, 200), control the display to display a guidance message (410) indicating information regarding the source while the content list is displayed and requesting connection to the source providing the selected content to the display apparatus,
wherein the information regarding the plurality of contents included in the content list that is displayed comprises a plurality of thumbnail images each corresponding to the plurality of contents,
wherein the display apparatus further comprises:
a storage (260),
wherein the controller (130, 290) stores source information related to the reproduced content whenever the content is reproduced,
wherein the controller provides the information regarding the source included in the guidance message using source information related to the stored content.

5. The apparatus (100, 200) as claimed in claim 4, wherein the controller (130, 290) controls the display (110, 230) to remove the guidance message (410) from a display screen and display the content list again, when the source is not connected to the display apparatus (100, 200) within a predetermined period of time while the guidance message (410) is displayed.

6. The apparatus (100, 200) as claimed in claim 4, wherein the controller (130, 290) controls the display to remove the guidance message (410) from a display screen and access and reproduce the selected content stored in the connected source when the source is connected to the display apparatus (100, 200) within a predetermined period of time while the guidance message (410) is displayed.

## Patentansprüche

1. Verfahren zur Bereitstellung einer Benutzerschnittstelle einer Anzeigevorrichtung (100, 200), wobei das Verfahren Folgendes umfasst:
Empfangen eines Benutzerbefehls, eine Inhaltsliste zu generieren, die mindestens einen Inhalt beinhaltet, wobei die Inhaltsliste eine Verlaufsliste (300) ist, die mindestens einen Inhalt (310, 320, 330, 340, 350, 360) beinhaltet, der durch einen Benutzer unter Verwendung der Anzeigevorrichtung (100, 200) wiedergegeben wurde;
Generieren der Inhaltsliste, die Informationen bezüglich des mindestens einen Inhalts beinhaltet, unabhängig davon, ob mindestens eine Quelle, die den mindestens einen Inhalt (310, 320, 330, 340, 350, 360) in der Inhaltsliste bereitstellt, mit der Anzeigevorrichtung (100, 200) verbunden ist;
Anzeigen der Inhaltsliste; und
Bestimmen, ob eine Quelle, die ausgewählten Inhalt bereitstellt, mit der Anzeigevorrichtung (100, 200) verbunden ist, wenn einer von dem mindestens einen Inhalt (310, 320, 330, 340, 350, 360), der in der Inhaltsliste beinhaltet ist, ausgewählt ist,
als Reaktion auf eine Bestimmung, dass die Quelle mit der Anzeigevorrichtung (100, 200) verbunden ist, Zugreifen auf den ausgewählten Inhalt und Abspielen des ausgewählten Inhalts und
als Reaktion auf eine Bestimmung, dass die Quelle nicht mit der Anzeigevorrichtung (100, 200) verbunden ist, Anzeigen einer Anleitungsnachricht (410), die Informationen bezüglich der Quelle angibt, während die Inhaltsliste angezeigt wird, und Anfordern einer Verbindung mit der Quelle, die den ausgewählten Inhalt an der Anzeigevorrichtung bereitstellt,
wobei die Informationen bezüglich der Vielzahl von Inhalten, die in der Inhaltsliste, die angezeigt wird, beinhaltet sind, eine Vielzahl von Miniaturbildern umfassen, die jeweils der Vielzahl von Inhalten entsprechen, wobei die Anzeigevorrichtung (100, 200) immer dann, wenn der Inhalt wiedergegeben wird, Quelleninformationen speichert, die sich auf den wiedergegebenen Inhalt beziehen,
wobei die Anleitungsnachricht (410) die Informationen bezüglich der Quelle unter Verwendung von Quelleninformationen des gespeicherten Inhalts bereitstellt.

2. Verfahren nach Anspruch 1, umfassend:
Entfernen der Anleitungsnachricht (410) von einem Anzeigebildschirm und erneutes Anzeigen der Inhaltsliste, wenn die Quelle nicht innerhalb eines vorbestimmten Zeitraums mit der Anzeigevorrichtung (100, 200) verbunden ist, während die Anleitungsnachricht (410) angezeigt wird.

3. Verfahren nach Anspruch 1, umfassend:
Entfernen der Anleitungsnachricht (410) von einem Anzeigebildschirm und Zugreifen auf den ausgewählten Inhalt, der in der verbundenen Quelle gespeichert ist, und Wiedergeben davon, wenn die Quelle innerhalb eines vorbestimmten Zeitraums mit der Anzeigevorrichtung (100, 200) verbunden ist, während die Anleitungsnachricht (410) angezeigt wird.

4. Anzeigevorrichtung (100, 200), umfassend:
eine Anzeige (110, 230);
eine Benutzereingabe (120, 280), die dazu konfiguriert ist, einen Benutzerbefehl zu empfangen, eine Inhaltsliste zu generieren, die mindestens einen Inhalt beinhaltet, wobei die Inhaltsliste eine Verlaufsliste (300) ist, die mindestens einen Inhalt (310, 320, 330, 340, 350, 360) beinhaltet, der durch einen Benutzer unter Verwendung der Anzeigevorrichtung (100, 200) wiedergegeben wurde; und
eine Steuerung (130, 290), die zu Folgendem konfiguriert ist:
Generieren der Inhaltsliste, die Informationen bezüglich des mindestens einen Inhalts beinhaltet, unabhängig davon, ob eine Quelle, die den mindestens einen Inhalt (310, 320, 330, 340, 350, 360) in der Inhaltsliste bereitstellt, mit der Anzeigevorrichtung (100, 200) verbunden ist;
Steuern der Anzeige, um die Inhaltsliste anzuzeigen;
Bestimmen, ob eine Quelle, die durch den Benutzer ausgewählten Inhalt bereitstellt, mit der Anzeigevorrichtung (100, 200) verbunden ist, wenn einer von mindestens einem Inhalt (310, 320, 330, 340, 350, 360) ausgewählt ist, der in der Inhaltsliste beinhaltet ist,
als Reaktion auf eine Bestimmung, dass die Quelle mit der Anzeigevorrichtung (100, 200) verbunden ist, Zugreifen auf den ausgewählten Inhalt und Abspielen des ausgewählten Inhalts und
als Reaktion auf eine Bestimmung, dass die Quelle nicht mit der Anzeigevorrichtung (100, 200) verbunden ist, Steuern der Anzeige zum Anzeigen einer Anleitungsnachricht (410), die Informationen bezüglich der Quelle angibt, während die Inhaltsliste angezeigt wird, und Anfordern einer Verbindung mit der Quelle, die den ausgewählten Inhalt an der Anzeigevorrichtung bereitstellt,
wobei die Informationen bezüglich der Vielzahl von Inhalten, die in der Inhaltsliste, die angezeigt wird, beinhaltet sind, eine Vielzahl von Miniaturbildern umfassen, die jeweils der Vielzahl von Inhalten entsprechen,
wobei die Anzeigevorrichtung ferner Folgendes umfasst:
einen Speicher (260),
wobei die Steuerung (130, 290) immer dann, wenn der Inhalt wiedergegeben wird, Quelleninformationen speichert, die sich auf den wiedergegebenen Inhalt beziehen,
wobei die Steuerung die Informationen bezüglich der Quelle, die in der Anleitungsnachricht beinhaltet sind, unter Verwendung von Quelleninformationen bereitstellt, die sich auf den gespeicherten Inhalt beziehen.

5. Vorrichtung (100, 200) nach Anspruch 4, wobei die Steuerung (130, 290) die Anzeige (110, 230) steuert, um die Anleitungsnachricht (410) von einem Anzeigebildschirm zu entfernen und die Inhaltsliste erneut anzuzeigen, wenn die Quelle nicht innerhalb eines vorbestimmten Zeitraums mit der Anzeigevorrichtung (100, 200) verbunden ist, während die Anleitungsnachricht (410) angezeigt wird.

6. Vorrichtung (100, 200) nach Anspruch 4, wobei die Steuerung (130, 290) die Anzeige steuert, um die Anleitungsnachricht (410) von einem Anzeigebildschirm zu entfernen und auf den ausgewählten Inhalt, der in der verbundenen Quelle gespeichert ist, zuzugreifen und diesen wiederzugeben, wenn die Quelle innerhalb eines vorbestimmten Zeitraums mit der Anzeigevorrichtung (100, 200) verbunden ist, während die Anleitungsnachricht (410) angezeigt wird.

## Revendications

1. Procédé permettant de fournir une interface utilisateur d'un appareil d'affichage (100, 200), le procédé comprenant :
la réception d'une commande d'utilisateur pour générer une liste de contenu comprenant au moins un contenu, ladite liste de contenu étant une liste d'historique (300) comprenant au moins un contenu (310, 320, 330, 340, 350, 360) qui a été reproduit par un utilisateur à l'aide de l'appareil d'affichage (100, 200) ;
la génération de la liste de contenu comprenant des informations concernant l'au moins un contenu indépendamment de la connexion ou non d'au moins une source fournissant l'au moins un contenu (310, 320, 330, 340, 350, 360) dans la liste de contenu à l'appareil d'affichage (100, 200) ;
l'affichage de la liste de contenu ; et
la détermination pour savoir si une source fournissant un contenu sélectionné est connectée à l'appareil d'affichage (100, 200) lorsque l'un des au moins un contenu (310, 320, 330, 340, 350, 360) compris dans la liste de contenu est sélectionné,
en réponse à une détermination que la source est connectée à l'appareil d'affichage (100, 200), l'accès au contenu sélectionné et la lecture du contenu sélectionné, et
en réponse à une détermination que la source n'est pas connectée à l'appareil d'affichage (100, 200), l'affichage d'un message de guidage (410) indiquant des informations concernant la source pendant l'affichage de la liste de contenu, et la demande de connexion à la source fournissant le contenu sélectionné à l'appareil d'affichage
lesdites informations concernant la pluralité de contenus compris dans la liste de contenu qui est affichée comprenant une pluralité d'images miniatures correspondant chacune à la pluralité de contenus, ledit appareil d'affichage (100, 200) stockant des informations de source relatives au contenu reproduit chaque fois que le contenu est reproduit,
ledit message de guidage (410) fournissant les informations concernant la source à l'aide d'informations de source du contenu stocké.

2. Procédé selon la revendication 1, comprenant :
la suppression du message de guidage (410) d'un écran d'affichage et l'affichage de la liste de contenu à nouveau lorsque la source n'est pas connectée à l'appareil d'affichage (100, 200) dans une période de temps prédéfinie pendant l'affichage du message de guidage (410).

3. Procédé selon la revendication 1, comprenant :
la suppression du message de guidage (410) d'un écran d'affichage et l'accès et la reproduction du contenu sélectionné stocké dans la source connectée lorsque la source est connectée à l'appareil d'affichage (100, 200) dans une période de temps prédéfinie pendant l'affichage du message de guidage (410).

4. Appareil d'affichage (100, 200) comprenant :
un afficheur (110, 230) ;
une entrée d'utilisateur (120, 280) configurée pour recevoir une commande d'utilisateur pour générer une liste de contenu comprenant au moins un contenu, ladite liste de contenu étant une liste d'historique (300) comprenant au moins un contenu (310, 320, 330, 340, 350, 360) qui a été reproduit par un utilisateur à l'aide de l'appareil d'affichage (100, 200) ; et
un dispositif de commande (130, 290) configuré pour :
générer la liste de contenu comprenant des informations concernant l'au moins un contenu indépendamment de la connexion ou non d'une source fournissant l'au moins un contenu (310, 320, 330, 340, 350, 360) dans la liste de contenu à l'appareil d'affichage (100, 200) ;
commander l'afficheur pour afficher la liste de contenu ;
déterminer si une source fournissant un contenu sélectionné par l'utilisateur est connectée à l'appareil d'affichage (100, 200), lorsque l'un d'au moins un contenu (310, 320, 330, 340, 350, 360) compris dans la liste de contenu est sélectionné,
en réponse à une détermination que la source est connectée à l'appareil d'affichage (100, 200), accéder au contenu sélectionné et lire le contenu sélectionné, et
en réponse à une détermination que la source n'est pas connectée à l'appareil d'affichage (100, 200), commander l'afficheur pour afficher un message de guidage (410) indiquant des informations concernant la source pendant l'affichage de la liste de contenu et demander une connexion à la source fournissant le contenu sélectionné à l'appareil d'affichage,
lesdites informations concernant la pluralité de contenus compris dans la liste de contenu qui est affichée comprenant une pluralité d'images miniatures correspondant chacune à la pluralité de contenus,
ledit appareil d'affichage comprenant en outre :
un dispositif de stockage (260),
ledit dispositif de commande (130, 290) stockant des informations de source relatives au contenu reproduit chaque fois que le contenu est reproduit,
ledit dispositif de commande fournissant les informations concernant la source comprises dans le message de guidage à l'aide d'informations de source liées au contenu stocké.

5. Appareil (100, 200) selon la revendication 4, ledit dispositif de commande (130, 290) commandant l'afficheur (110, 230) pour supprimer le message de guidage (410) d'un écran d'affichage et afficher à nouveau la liste de contenu, lorsque la source n'est pas connectée à l'appareil d'affichage (100, 200) dans une période de temps prédéfinie pendant l'affichage du message de guidage (410).

6. Appareil (100, 200) selon la revendication 4, ledit dispositif de commande (130, 290) commandant l'afficheur pour supprimer le message de guidage (410) d'un écran d'affichage et accéder et reproduire le contenu sélectionné stocké dans la source connectée lorsque la source est connectée à l'appareil d'affichage (100, 200) dans une période de temps prédéfinie pendant l'affichage du message de guidage (410).
